# EUROPEAN PATENT APPLICATION

(11) **EP 2 741 514 A2**
(43) Date of publication of application: **11.06.2014**
(21) Application number: 13183314.7
(22) Date of filing: 06.09.2013
(51) Int. Cl.: H04N 21/426, H04N 21/462, H04N 21/443

(54) **Playing of multiple media streams in a single-player software environment**

(30) Priority: 06.09.2012 US 201261697674 P; 28.12.2012 US 201213729431
(71) Applicant: OpenTV, Inc., San Francisco, CA 94111 (US)
(72) Inventor: Lee, Ki Young, San Francisco, CA California 94111 (US); Park, Joonyoung, San Francisco, CA California 94111 (US)
(74) Representative: Leman Consulting S.A.

(57) **Abstract**

Methods and systems of playing multiple media streams in a single-player environment are presented. In an example, creation of a live media player associated with a first output of a media machine and creation of a non-live media player associated with a second output of the media machine are requested. The live media player and the non-live media player are presented to a resource manager of the media machine with a shared live property for assignment of separate media tuners. In response to the assignment, live playing of a first media stream using the live media player and live playing of a second media stream using the non-live media player are initiated.

## Description

### BACKGROUND

A media playback and/or recording device, such as a set-top box (STB), a digital video recorder (DVR), and so on, may often include multiple tuners for receiving more than one stream of media, such as digital video content, digital audio content, or some combination thereof. More specifically, a tuner may include hardware configured to identify a data stream (e.g., a stream of media, such as digital video, digital audio, or any suitable combination thereof) within a multiplexed data stream (e.g., containing several streams of media) and extract the identified data stream from the multiplexed data stream. In some situations, a data stream is identified by its packet identifier (PID), and several data streams are multiplexed together into a transport stream (TS). In such cases, a tuner may be configured to access the TS, identify a data stream by its PID, and extract (e.g., parse) the data stream from the TS for further processing, such as encryption, decryption, transcoding (e.g., decoding from one data format and recoding into another data format), user presentation (e.g., playback), storage, or any suitable combination thereof.

In certain situations, two tuners of hardware (e.g., hardware tuners) may be accessed and controlled by software executing within the media device to allow a user to access more than one media stream simultaneously for current viewing, recording for subsequent viewing, and other uses. In some examples, the tuners, as well as other components of the media device or machine, are configured and controlled via "middleware," which may be a type of software that provides one or more interfaces for other, higher-level software in the device to control various functional aspects, such as viewing and recording of the media streams, of the media machine.

In some examples, the middleware or other software may enforce one or more resource policies that inflexibly disallow the live playing or presentation of two data streams at the same time. In other words, within the media device or machine, multiple hardware tuners may be controlled by software that disallows (e.g., via one or more resource policies) the live playback or presentation to a user of multiple data streams simultaneously, despite the presence of multiple tuners. In such situations, the device may be configured to receive and extract the multiple streams (e.g., two data streams), and play one of the streams live (e.g., process a first stream in a live playing session) while recording one or more of the multiple streams (e.g., process a second stream in a recording session). In some implementations, such a policy is enforced as a result of the media device being configured to present the media to a user via a single output device, such as a television.

### BRIEF DESCRIPTION OF THE DRAWINGS

FIG. 1 is a block diagram illustrating a system (e.g., a device or machine) configured to facilitate the playing of multiple streams (e.g., multiple transcoded streams) in a single-player software environment, according to some example embodiments.

FIG. 2 is a block diagram of a transport block of the system of FIG. 1, according to some example embodiments.

FIG. 3 is a block diagram of a transcoder block of the system of FIG. 1, according to some example embodiments.

FIG. 4 is a network diagram illustrating a media machine that implements the above-described methodologies, according to some example embodiments.

FIG. 5 is a block diagram that illustrates components of the media machine, according to some example embodiments. One or more components of the media machine may be configured to perform any one or more of the methodologies described herein, such as the method described below with respect to FIG. 6.

FIG. 6 is a flow diagram illustrating operations in a method of playing multiple streams (e.g., multiple transcoded streams) in a single-player software environment, according to some example embodiments.

FIG. 7 illustrates components of a machine, according to some example embodiments, that is able to read instructions from a machine-readable medium (e.g., a machine-readable storage medium) and perform any one or more of the methodologies discussed herein.

### DETAILED DESCRIPTION

Example methods and systems discussed herein are directed to playing multiple media streams simultaneously or concurrently within a single-player software environment. Examples merely typify possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

According to some example embodiments, the methods and systems described herein may be implemented within a media set-top box (STB) (e.g., a television STB capable of receiving and decoding satellite or cable television signals for user presentation, storage, and so on), a media streamer (e.g., a video streaming device or machine configured to receive one or more streams of media, such as digital video, digital audio, or any suitable combination thereof, via a network, such as the Internet, and to present one or more of the streams for user presentation), a network gateway (e.g., a micro-gateway within a public or private network capable of receiving one or more streams of media via a network for user presentation, storage, and so on), or any other media device or machine that incorporates or accesses multiple media streams simultaneously, such as by way of multiple tuners.

By implementing the systems and methods discussed herein, a multi-tuner device or machine may be configured to perform live presentation or playing of multiple streams simultaneously or concurrently despite a software resource policy in the device that disallows simultaneous live playback of multiple data streams. For example, in software executing on the device, only one "live" player (e.g., "Player A") associated with a device output to deliver live media content (e.g., media content that is currently being received at the device) may be allowed. In some implementations, a "player" is a software object or session provided in the media device that accesses or uses its associated tuner. Player A may also be designated with the property or attribute "LIVE" to indicate that Player A is delivering or presenting live content. To allow a second tuner to play or present a second live media stream, the software may create a second player (e.g. "Player B") of a "phantom" type, "non-live" type, or some other alternative designation (as opposed to a "normal" type associated with Player A) associated with a second output of the device. Further, Player B may share the LIVE property of Player A with Player A. Playing or presentation of a media stream may include either or both of the presentation of the media stream via a direct output of the media device to an output device (e.g., a television), and the presentation of the media stream via a network coupled with the media device to an output device.

In addition, the second tuner associated with Player B may be denoted in the software with a property (e.g., NO_SHARE) that indicates the second tuner is not to be shared with other players or sessions so that requests for use of the second tuner from outside Player B are denied or ignored. Employing the NO_SHARE designation may thus prevent use of the second tuner by Player B as being interpreted in the software as a "channel zap," in which the media stream being played by the second tuner is changed by Player B unexpectedly. Designating the second tuner NO_SHARE may thus be desirable in situations in which the software typically allows sharing of a tuner with multiple players, sessions, or "clients."

Accordingly, based on the embodiments described above, from the perspective of the device software, Player A and Player B may be linked with separate clients for the tuners (e.g., player modules), and yet only one of the players is marked as a "live" player, thus comporting with the resource policy of the device software. From a hardware perspective, however, two separate live player sessions coexist simultaneously. In embodiments in which more than two tuners are available in the media device or machine, a first tuner may be associated with a normal player, and two or more other players may be designated as phantom players sharing the LIVE property of the first player.

In some examples, the media device may include a transcoder to transform the encoding of one or more media streams from one format to another, depending on the needs of a particular output device. As a result, the media device may employ both a main transport system-on-a-chip (SoC) containing one or more tuners and a separate transcoder SoC in some implementations. Typically, transmission of a stream from the main transport SoC and the transcoder SoC occurs via a standard input/output (I/O) connection, such as an Ethernet-over-USB (Universal Serial Bus), or "USB Ethernet," connection between the two SoCs, in which Ethernet signaling protocols are employed over a USB-based hardware connection. However, when transferring at least two media streams between the two SoCs, the standard I/O connection may not provide the bandwidth typically consumed by more than one media stream. Thus, in one embodiment, each of the media transport streams may be transmitted from the main SoC to the transcoder SoC via a separate data link. After the transcoding operation, which generally results in a data rate reduction of the transcoded stream, each transcoded stream may then be transmitted back to the main SoC via a standard I/O connection, and then distributed to a network or output device via one or more outputs of the main SoC.

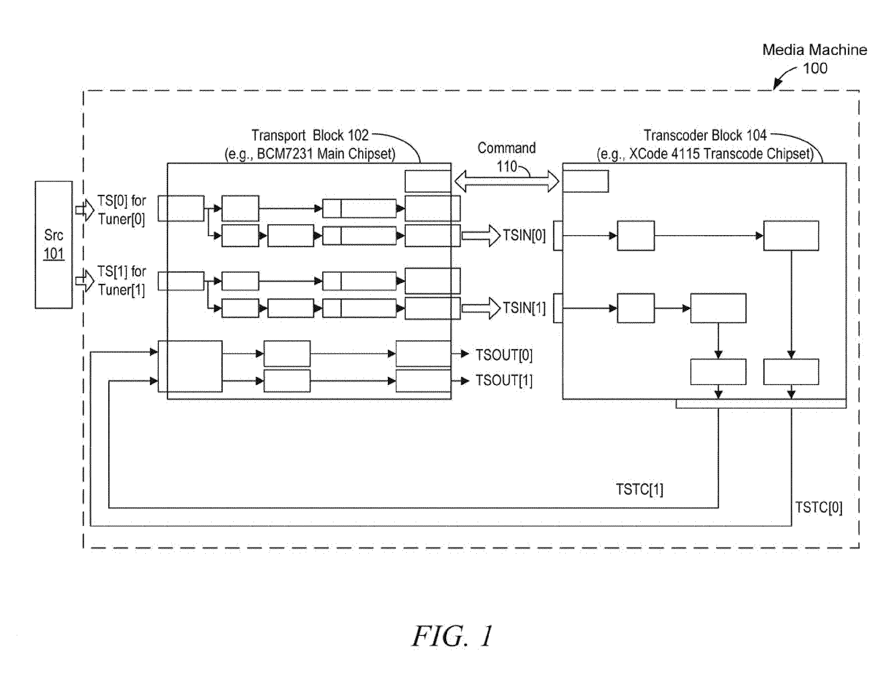

FIG. 1 depicts an example media machine 100 for playing or presenting multiple live streams of media, such as, for example, digital video streams, digital audio streams, or some combination thereof. Particular examples of the media machine 100 may include, but are not limited to, an STB, a DVR, a media streamer, or other device employing multiple media stream tuners. Included in the media machine 100 of FIG. 1 are a transport block 102 that includes multiple tuners, and a transcoder block 104 for transcoding media streams from one media encoding format to another. In at least some examples, the transcoder block 104 may not be included in the media machine 100. In playing multiple live streams, the media machine 100 may deliver each live stream directly to an output device (e.g., a television) and/or via a communication network (e.g., a wide-area network (WAN), such as the Internet, a local-area network (LAN), or another communication network or link) to an output device or other media system.

As shown in FIG. 1, the transport block 102 may be a BCM7231 IP Set-Top Box SoC by Broadcom® Corporation of Irvine, California, and the transcoder block 104 may be an Xcode® 4115 Transcode SoC by ViXS^{™} Systems, Inc. of Toronto, Ontario, Canada. However, other circuitry may be employed for the transport block 102 and the transcoder block 104 in other implementations.

In the particular example of FIG. 1, the transport block 102 of the media machine 100 includes two tuners, although other embodiments not specifically described herein may include more than two tuners. Each tuner (e.g., Tuner[0] and Tuner[1]) receives a transport stream (e.g., TS[0] and TS[1]) that includes one or more different media streams. Each tuner is configured to extract or parse a particular media stream from its transport stream, such as a particular cable or a satellite video channel with accompanying audio. The transport streams TS[0], TS[1] are received from one or more media sources 101, such as broadcast networks, movie channels, news outlets, local television stations, and so on. Each media stream may be, for example, a stream of live media content or of previously recorded content being broadcast or rebroadcast.

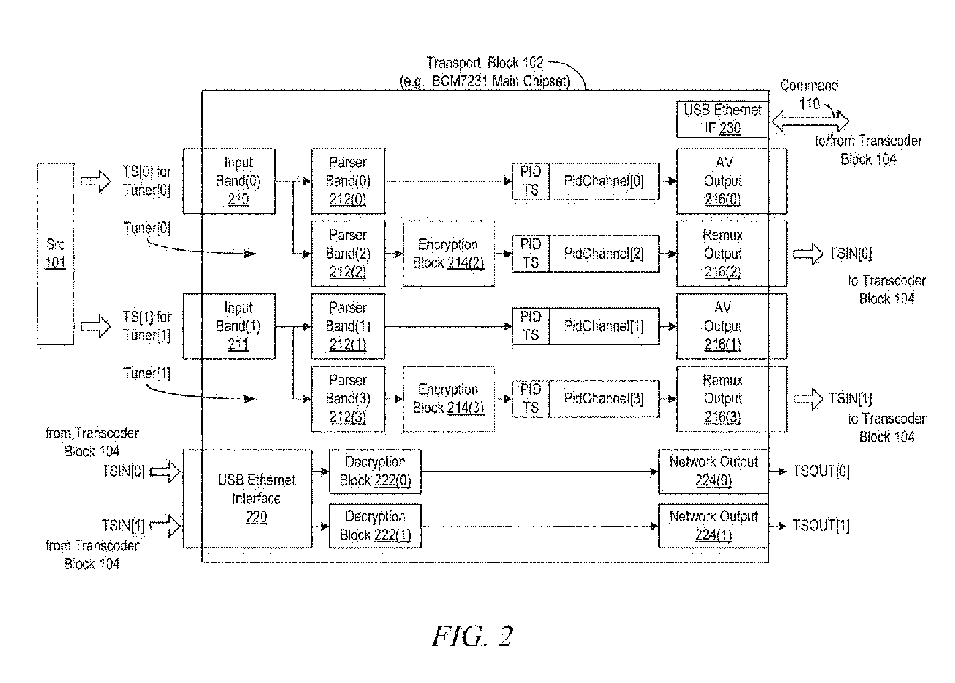

FIG. 2 is a more detailed block diagram of an example of the transport block 102 of FIG. 1. Each of the transport streams TS[0], TS[1] is provided to an associated input band (e.g., Input Band(0) 210 and Input Band(1) 211) that operates as an input interface for the transport stream. Each Input Band(0) 210, Input Band (1) 211 may then forward its transport stream TS[0], TS[1] to a pair of parser bands (e.g., Parser Band(0) 212(0) and Parser Band(2) 212(2) for Tuner[0]; Parser Band(1) 212(1) and Parser Band(3) 212(3) for Tuner[1]), each of which may parse its incoming transport stream TS[0], TS[1] using PIDs, as described above, to extract or isolate a particular media stream of interest. In one example, the media stream of interest is selected by a user of the media machine 100, such as via a user interface (not shown) of the media machine 100. For Parser Band(0) 212(0) and Parser Band(1) 212(1), the extracted media stream (e.g., PidChanne1[0] and PidChanne1[1], respectively) is forwarded to an audio/video (AV) output (e.g., AV output 216(0) and AV output 216(1), respectively) for direct delivery to a television or other output device for presentation to a user. In one example, both extracted media streams (e.g., PidChannel[0] and PidChannel[1]) may be combined and then forwarded to a single AV output 216 to facilitate the presentation of two media streams via one output device, such as in a picture-in-picture (PIP) format.

For each of Parser Band(2) and Parser Band(3), the extracted media stream (e.g., PidChannel[2] and PidChannel[3], respectively) may be encrypted by an encryption circuit or module (e.g., encryption block 214(2) and encryption block 214(3), respectively) before being provided to an associated re-multiplexer output (e.g., re-multiplexer output 216(2) and re-multiplexer output 216(3), respectively) for delivery as an encrypted transport stream (e.g., TSIN[0] and TSIN[1], respectively) containing the encrypted media stream to the transcoder block 104 via high-speed transform stream data link outputs provided in the transport block 102. In one example, the media stream is encrypted before being transmitted to another area of the media machine 100 to prevent piracy or alteration of the media stream prior to being output from the media machine 100.

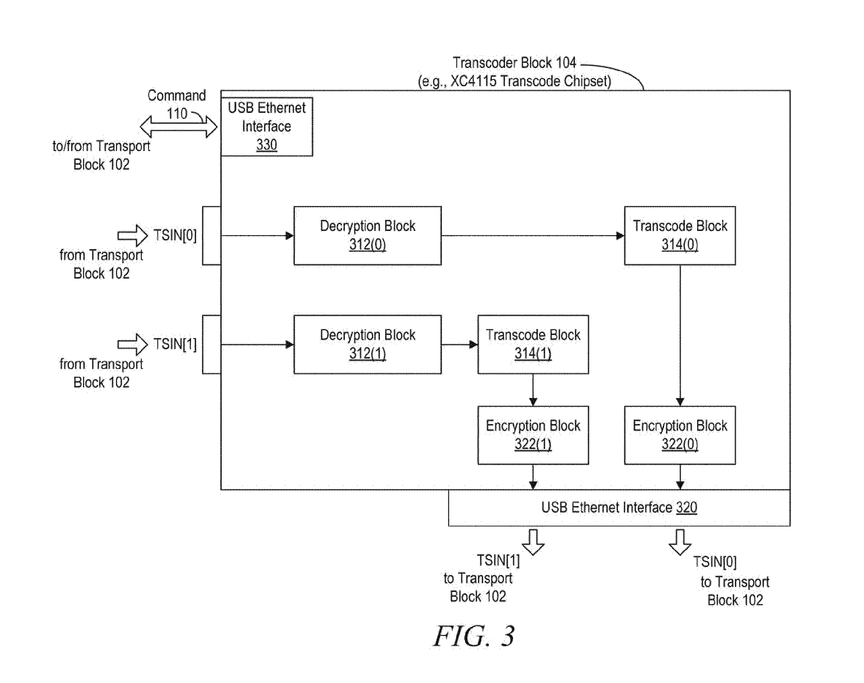

FIG. 3 is a more detailed block diagram of an example of the transcoder block 104 of FIG. 1. As shown, the transcoder block 104 receives the encrypted transport streams TSIN[0], TSIN[1] via a media transport stream input or link, decrypts the streams via decryption circuitry or modules (e.g., decryption block 312(0) and decryption block 312(1), respectively), transcodes the streams via decryption circuitry or modules (e.g., transcode block 314(0) and transcode block 314(1), respectively), and re-encrypts the streams via encryption circuitry or modules (e.g., encryption block 322(0) and encryption block 322(1), respectively) prior to transporting the re-encrypted streams TSIN[0] and TSIN[1] via a standard I/O interface, such as an Ethernet-over-USB, or USB Ethernet, interface 320. In one example, the transcoding of a media stream is performed so that the media stream may be encoded in a format that is compatible with a particular receiving device. For example, while the format of a media stream may be received at the media machine 100 in MPEG-2 (Motion Picture Experts Group-2), MPEG-4, or another typical broadcast format, the media stream may be transcoded to a format (e.g., AVC (Advanced Video Coding)) more compatible with a mobile device. In other examples, the transcoding may be performed to alter (e.g., reduce) the overall bit rate of the media stream to render the media stream more compatible for a particular network connection or receiving device.

Additionally, commands 110 and/or status between the transport block 102 and the transcoder block 104, such as, for example, the setting of the particular transcoding scheme to be employed in the transcoder block 104, may be transmitted over a standard I/O interface 330 (e.g., an Ethernet-over-USB, or USB Ethernet, interface) at the transcoder block 104 and a compatible standard I/O interface 230 at transport block 102. In the particular example of FIGS. 2 and 3, the standard I/O interface 230, 330 for transferring commands 110 and/or status is separate, or in addition to, the I/O interface 320 utilized to transport the re-encrypted streams TSIN[0] and TSIN[1] from the transcoder block 104 to the transport block 102.

Returning to FIG. 2, the transport block 102 then receives the re-encrypted media streams TSIN[0], TSIN[1] from the transcoder block 104 via a USB Ethernet interface 220 provided therein, decrypts the re-encrypted media streams TSIN[0], TSIN[1] using decryption circuitry or modules (e.g., decryption block 222(0) and decryption block 222(1), respectively), and transmits the resulting decrypted output transport streams (e.g., TSOUT[0] and TSOUT[1], respectively) via a network output interface (e.g., network output 224(0) and network output 224(1), respectively). In one example, the network output interface 224(0), 224(1) may be an Ethernet interface, a WiFi® interface, or another type of wired or wireless network interface connection.

As discussed above, by employing the original, higher bit rate transport stream outputs (e.g., re-multiplexer output 216(2) and re-multiplexer output 216(3)) of the transport block 102 and the transport stream inputs of the transcoder block 104 to transfer the transport streams from the transport block 102 to the transcoder block 104, and only employing the USB Ethernet connection between the transport block 102 and the transcoder block 104 for the transcoded media streams, playing functionality for both tuners of the transport block 102 may be accomplished simultaneously.

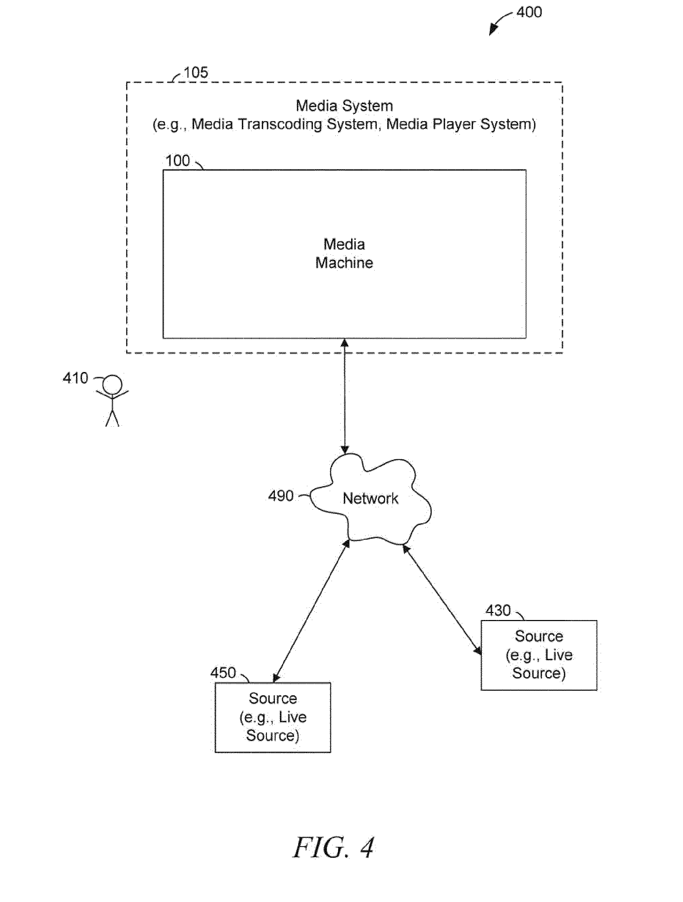

FIG. 4 is a network diagram of a communication system 400 illustrating a media machine 100 that implements the above-described methodologies, according to some example embodiments. As shown therein, the media machine 100 may be part of a larger media system 105, such as, for example, a media player system, a media streaming system, or a media transcoding system. The media system 105 may be operated for the benefit of one or more users or consumers 410 of media streams, such as audio and/or video streams. Further, the various media streams may be provided by one or more media sources 430, 450, such as, for example, broadcast networks, local television stations, cable outlets, and the like, via a network 490. The network 490 may include one or more of a WAN (e.g., the Internet), a LAN, a cellular communication network, and/or any other communication network.

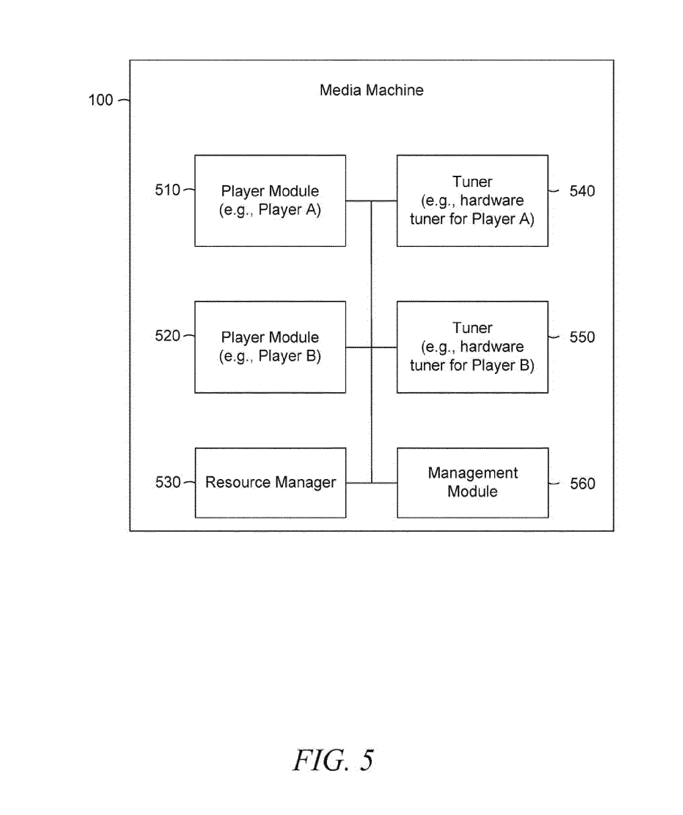

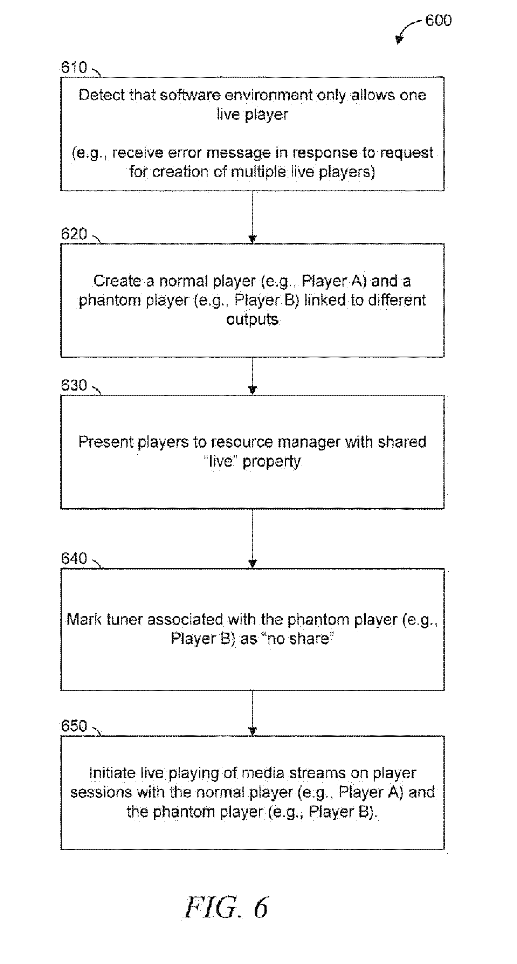

FIG. 5 is a block diagram that illustrates components or modules of the media machine 100, according to some example embodiments. One or more components of the media machine 100 may be configured to perform any one or more of the methodologies described herein, such as a method described below with respect to FIG. 6. Each of the modules or components may include hardware, software, firmware, or some combination thereof. As shown in FIG. 5, the media machine 100 may include a first player module 510, a second player module 520, a first tuner 540, a second tuner 550, a resource manager 530, and a management module 560.

As described in greater detail below in conjunction with FIG. 6, the first player module 510 may be a first media player (e.g., Player A) created by software (e.g., middleware) executing in the media machine 100 for playing a first media stream. Similarly, the second player module 520 may be a second media player (e.g., Player B) created by the software to play a second media stream. A media stream that is being played may be transmitted over a network from the media machine 100 to a receiving device for subsequent user presentation, or may be provided to an output device coupled directly to the media machine 100.

The first tuner 540 and the second tuner 550 may be, in one example, hardware tuners that parse a media stream from a transport stream carrying one or more media streams, as described above. In the example method described below, the first tuner 540 may be associated with, or assigned to, the first player module 510, and the second tuner 550 may be associated with, or assigned to, the second player module 520. In one example, the first tuner 540 and the second tuner 550 may be Tuner[0] and Tuner[1], or vice-versa, as described above in conjunction with FIGS. 1-3.

The resource manager 530, in one example, may be configured to manage one or more resources (e.g., the tuners 540, 550) of the media machine 100. More specifically, the resource manager 530 may assign the first tuner 540 to the first player module 510 (e.g., Player A) and may assign the second tuner 550 to the second player module 520 (e.g., Player B) according to the method described below in conjunction with FIG. 6. In one example, the resource manager 530 is software (e.g., middleware) executing in the media machine 100. In one example, the resource manager 530 maintains a resource policy prohibiting the existence of more than one live stream player in the media machine 100 at a time.

The management module 560 may be configured to implement a method of playing multiple media streams simultaneously or concurrently in a single-player software environment, such as the method described below in conjunction with FIG. 6. In one example, the management module 560 may be a portion of the middleware executing on the media machine 100, or may be software executing on the media machine 100 that is not included in the middleware.

FIG. 6 is a flow diagram illustrating operations in a method 600 of playing or presenting multiple streams (e.g., multiple transcoded streams) in a single-player software environment, according to some example embodiments. In the method 600, the management module 560 may detect whether the software environment (e.g., the middleware or, more specifically, the resource manager 530) allows only one live stream player at a time (operation 610). For example, the management module 560 may attempt to create more than one live player. If the resource manager 530 returns an error or other status indicating that the creation of multiple live players is not allowed, the management module 560 may interpret such status as a resource policy prohibiting the concurrent existence of multiple live players. In other examples, the management module 560 may simply presume that the resource manager 530 enforces such a resource policy.

The management module 560 may then create one "live" player (e.g., Player A of the first player module 510) associated with one device output or network output of the media machine 100 and a second "phantom" or "non-live" player (e.g., Player B of the second player module 520) associated with a second device output or network output (operation 620), such as through a request to the resource manager 530. In one example, the phantom player is indicated in the creation request to be a player that will not be employed for live presentation of media content. In some implementations, each player may be a software object or session provided in the media machine 100 that is configured to access a tuner for the playing of a media stream.

The management module 560 may then present the players to the resource manager 530 (operation 630). Further, the management module 560 may associate Player A (e.g., the normal player) with a LIVE property or attribute that is shared with Player B (e.g., the phantom player) prior to presentation of Player A and Player B to the resource manager 530. In response, the resource manager 530 may associate or assign one of the tuners 540, 550 to each of the players. More specifically, the first tuner 540 may be assigned to Player A, while the second tuner 550 is assigned to Player B.

In addition, the management module 560 may denote or mark the second tuner 550 associated with Player B in the software with a property (e.g., NO_SHARE) that indicates the second tuner is not to be shared with other players or sessions (operation 640) to prevent "channel zap" conflicts between Player B and other sessions attempting to access the second tuner 550 as a resource.

The management module 560 may then initiate the playing or presentation of separate media streams using the first player module 510 (e.g., Player A) and the second player module 520 (e.g., Player B) in conjunction with their associated tuners (e.g., the first tuner 540 and the second tuner 550, respectively). Each of the streams may be transmitted over a network for consumption by a receiving device, or provided directly to an output device for user presentation.

Accordingly, based on the embodiments discussed herein, from the perspective of the device software, Player A and Player B may be linked with separate clients for the tuners (e.g., player modules), and yet only one of the players is marked as a "live" player, thus comporting with the resource policy of the software executing on the media machine 100. However, from a hardware perspective, two separate live player sessions coexist simultaneously. As discussed earlier, in other embodiments, more than two tuners may each play a media stream by associating a first tuner with a normal player, and designating two or more other players as phantom players sharing a LIVE property of the first player.

By employing various embodiments described above, changes to existing software or middleware of a media machine enforcing a single-player policy to facilitate the use of multiple players within the same software environment are, at the most, minimal. Further, a transport block in communication with a transcoder block via transport stream connections or links in the media machine may facilitate the transfer of high-data-rate multiple media streams concurrently or simultaneously.

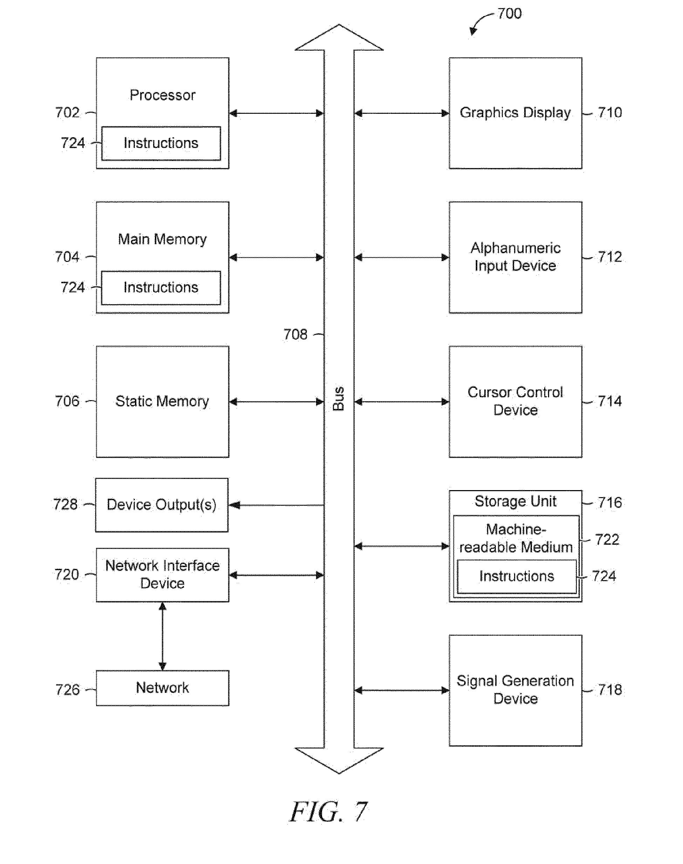

FIG. 7 shows a diagrammatic representation of a machine 700 in the example form of a computer system and within which instructions 724 (e.g., software) for causing the machine 700 to perform any one or more of the methodologies discussed herein may be executed. In alternative embodiments, the machine 700 operates as a standalone device or may be connected (e.g., networked) to other machines. In a networked deployment, the machine 700 may operate in the capacity of a server machine or a client machine in a server-client network environment, or as a peer machine in a peer-to-peer (or distributed) network environment. The machine 700 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions 724 (sequentially or otherwise) that specify actions to be taken by that machine. Further, while only a single machine is illustrated, the term "machine" shall also be taken to include a collection of machines that individually or jointly execute the instructions 724 to perform any one or more of the methodologies discussed herein.

The machine 700 includes a processor 702 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 704, and a static memory 706, which are configured to communicate with each other via a bus 708. The machine 700 may further include a graphics display 710 (e.g., a plasma display panel (PDP), a liquid crystal display (LCD), a projector, or a cathode ray tube (CRT)). The machine 700 may also include an alphanumeric input device 712 (e.g., a keyboard), a cursor control device 714 (e.g., a mouse, a touchpad, a trackball, a joystick, a motion sensor, or other pointing instrument), a storage unit 716, a signal generation device 718 (e.g., multiple hardware media tuners 540, 550, as described above in conjunction with FIG. 5, as well as a speaker), and a network interface device 720. Also, in addition to the network interface device 720 which may provide media streams via a network 726, the machine 700 may also include one or more device outputs 728 to provide media streams directly to one or more output devices.

The storage unit 716 includes a machine-readable medium 722 on which is stored the instructions 724 (e.g., software) embodying any one or more of the methodologies or functions described herein. The instructions 724 may also reside, completely or at least partially, within the main memory 704, within the processor 702 (e.g., within the processor's cache memory), or both, during execution thereof by the machine 700. Accordingly, the main memory 704 and the processor 702 may be considered as machine-readable media. The instructions 724 may be transmitted or received over the network 726 (e.g., network 490 of FIG. 4) via the network interface device 720.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 722 is shown in an example embodiment to be a single medium, the term "machine-readable medium" should be taken to include a single medium or multiple media (e.g., a centralized or distributed database, or associated caches and servers) able to store instructions (e.g., instructions 724). The term "machine-readable medium" shall also be taken to include any medium that is capable of storing instructions (e.g., software) for execution by the machine, such that the instructions, when executed by one or more processors of the machine (e.g., processor 702), cause the machine to perform any one or more of the methodologies described herein. The term "machine-readable medium" shall accordingly be taken to include, but not be limited to, a data repository in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured by software to become a special-purpose processor, the general-purpose processor may be configured as respectively different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

The Abstract of the Disclosure is provided to comply with 37 C.F.R. § 1.72(b), requiring an abstract that will allow the reader to quickly ascertain the nature of the technical disclosure. The Abstract is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

Although an embodiment of the present invention has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method of playing multiple media streams in a single-player environment, the method comprising:
requesting creation of a live media player;
requesting creation of a non-live media player;
presenting, in response to the creation of the live media player and the non-live media player, the live media player and the non-live media player to a resource manager of a media machine with a shared live property for media tuner assignment;
initiating, in response to the live media player being assigned a first media tuner, live playing of a first media stream using the live media player in conjunction with the first media tuner; and
initiating, in response to the non-live media player being assigned a second media tuner, live playing of a second media stream using the non-live media player in conjunction with the second media tuner.

2. The method of claim 1, further comprising:
marking, in response to the non-live media player being assigned the second media tuner, the non-live media player with a non-sharing property to prevent sharing of the second media tuner with other media players.

3. The method of claim 1, further comprising:
transmitting the first media stream to one of a communication network and a first output device; and
transmitting the second media stream to one of the communication network and a second output device.

4. The method of claim 1, further comprising:
transcoding at least one of the first media stream and the second media stream prior to the initiation of the live playing of the at least one of the first media stream and the second media stream.

5. The method of claim 1, further comprising:
requesting creation of a first initial live media player and a second initial live media player; and
receiving, in response to the requesting of the creation of the first initial live media player and the second initial live media player, an error indication indicating the creation of multiple live players is prohibited;
the requesting of the creation of the live media player and the non-live media player occurring in response to the error indication.

6. The method of claim 1, further comprising:
requesting creation of a second non-live media player;
presenting the second non-live media player, along with the live media player and the first non-live media player, to the resource manager of the media machine with the shared live property for media tuner assignment; and
initiating, in response to the second non-live media player being assigned a third media tuner, live playing of a third media stream using the second non-live media player in conjunction with the third media tuner.

7. The method of claim 6, further comprising:
marking, in response to the second non-live media player being assigned the third media tuner, the second non-live media player with the non-sharing property to prevent sharing of the third media tuner with other media players.

8. A tangible computer-readable storage medium including instructions that, when executed by at least one processor of a media machine, cause the media machine to perform operations comprising:
requesting creation of a live media player associated with a first media output of the media machine;
requesting creation of a non-live media player associated with a second media output of the media machine, the second media output being different from the first media output;
presenting, in response to the creation of the live media player and the non-live media player, the live media player and the non-live media player to a resource manager of the media machine with a shared live property for media tuner assignment;
initiating, in response to the live media player being assigned a first media tuner, live playing of a first media stream to the first media output using the live media player in conjunction with the first media tuner; and
initiating, in response to the non-live media player being assigned a second media tuner, live playing of a second media stream to the second media output using the non-live media player in conjunction with the second media tuner.

9. The tangible computer-readable storage medium of claim 8, the operations further comprising:
marking, in response to the non-live media player being assigned the second media tuner, the non-live media player with a non-sharing property to prevent sharing of the second media tuner with other media players.

10. A media machine comprising:
a plurality of hardware media tuners, each of the hardware media tuners configured to extract a media stream from a transport stream;
a plurality of outputs, each of the outputs configured to transmit a media stream to at least one of an output device and a communication network;
at least one processor; and
memory storing modules comprising instructions to be executed by the at least one processor, the modules comprising:
a resource manager configured to create media players upon request, each of the media players being configured to process a media stream using one of the hardware media tuners; and
a management module configured to:
request the resource manager to create a live media player associated with a first output; and
request the resource manager to create of a non-live media player associated with a second output, the second output being different from the first output;
the resource manager further configured to create the live media player and the non-live media player in response to the creation requests;
the management module further configured to present, in response to the creation of the live media player and the non-live media player, the live media player and the non-live media player to the resource manager with a shared live property for media tuner assignment;
the resource manager further configured to assign, in response to the presentation of the live media player and the non-live media player, a first hardware media tuner to the live media player, and a second hardware media tuner to the non-live media player; and
the management module further configured to:
initiate, in response to the live media player being assigned the first hardware media tuner, live playing of a first media stream using the live media player in conjunction with the first hardware media tuner; and
initiate, in response to the non-live media player being assigned the second hardware media tuner, live playing of a second media stream using the non-live media player in conjunction with the second hardware media tuner.

11. The media machine of claim 10, the management module further configured to mark, in response to the non-live media player being assigned the second media tuner, the non-live media player with a non-sharing property to prevent sharing of the second media tuner with others of the media players.

12. The media machine of claim 10, each of the outputs comprising one of a communication network connection and a direct output to a media output device.

13. The media machine of claim 10, the management module further configured to request the resource manager to create a first initial live media player and a second initial live media player, the resource manager further configured to generate an error indication indicating the creation of multiple live players is prohibited, the management module further configured to request the resource manager to create the live media player and the non-live media player in response to the error indication.

14. The media machine of claim 10, the management module further configured to request the resource manager to create a second non-live media player associated with a third output, the third output being different from the first output and the second output, and to present the second non-live media player, along with the live media player and the first non-live media player, to the resource manager with the shared live property for media tuner assignment, the resource manager further configured to assign, in response to the presentation of the live media player, the first non-live media player, and the second non-live media player, a third hardware media tuner to the second non-live media player, and to initiate, in response to the second non-live media player being assigned the third media tuner, live playing of a third media stream using the second non-live media player in conjunction with the third media tuner.

15. The media machine of claim 14, the management module further configured to mark, in response to the second non-live media player being assigned the third media tuner, the second non-live media player with the non-sharing property to prevent sharing of the third media tuner with others of the media players.

16. The media machine of claim 10, further comprising:
a first transcoder connectable to the first hardware media tuner to transcode the first media stream; and
a second transcoder connectable to the second hardware media tuner to transcode the second media stream.

17. The media machine of claim 16, the first hardware media tuner and the second hardware media tuner located on a first integrated circuit, the first transcoder and the second transcoder located on a second integrated circuit, each of the first media stream and the second media stream being transported from the first integrated circuit to the second integrated circuit via separate data links.

18. The media machine of claim 17, the first transcoder further configured to transmit the transcoded first media stream from the second integrated circuit to the first integrated circuit via an interface connection, the second transcoder further configured to forward the transcoded second media stream from the second integrated circuit to the first integrated circuit via the interface connection, the first integrated circuit comprising at least one network interface connection for transmitting the transcoded first media stream and the transcoded second media stream from the media machine.

19. The media machine of claim 18, the media machine further comprising:
at least one encryption block in the first integrated circuit to encrypt the first media stream and the second media stream prior to the transporting of the first media stream and the second media stream to the second integrated circuit;
at least one decryption block in the second integrated circuit to decrypt the first media stream and the second media stream prior to the transcoding of the first media stream and the second media stream;
at least one encryption block located in the second integrated circuit to encrypt the transcoded first media stream and the transcoded second media stream prior to the forwarding of the transcoded first media stream and the transcoded second media stream to the first integrated circuit; and
at least one decryption block located in the first integrated circuit to decrypt the transcoded first media stream and the transcoded second media stream prior to the transmitting of the transcoded first media stream and the transcoded second media stream from the media machine.

20. The media machine of claim 10, wherein the request to create the non-live media player specifies that the non-live media player to be created is not a media player to be employed for live presentation of media content.
